(19) Europäisches Patentamt
European Patent Office
Office européen des brevets

(11) Veröffentlichungsnummer: **0 355 642 B1**

(12) **EUROPÄISCHE PATENTSCHRIFT**

(45) Veröffentlichungstag der Patentschrift: **10.11.93**

(51) Int. Cl.$^5$: **G11B 7/24**

(21) Anmeldenummer: **89114975.9**

(22) Anmeldetag: **12.08.89**

# (54) Verwendung von Mischungen aus thermoplastischen Polycarbonaten und Copolymerisaten von Styrolen mit (Meth)-Acrylsäureestern als Substrate für optische Datenspeicher.

(30) Priorität: **25.08.88 DE 3828761**

(43) Veröffentlichungstag der Anmeldung:
**28.02.90 Patentblatt 90/09**

(45) Bekanntmachung des Hinweises auf die Patenterteilung:
**10.11.93 Patentblatt 93/45**

(84) Benannte Vertragsstaaten:
**DE FR GB IT NL**

(56) Entgegenhaltungen:
**EP-A- 0 259 753**
**EP-A- 0 262 502**
**EP-A- 0 279 287**
**JP-A- 6 119 656**

(73) Patentinhaber: **BAYER AG**
**D-51368 Leverkusen(DE)**

(72) Erfinder: **Serini, Volker, Dr.**
**Sebastian-Kneipp-Weg 2**
**D-4150 Krefeld(DE)**
Erfinder: **Berg, Klaus, Dr.**
**Hansastrasse 124**
**D-4150 Krefeld(DE)**
Erfinder: **Grigo, Ulrich, Dr.**
**Michelsheide 9**
**D-4152 Kempen 3(DE)**
Erfinder: **Morbitzer, Leo, Dr.**
**Rungestrasse 50**
**D-5000 Köln 80(DE)**
Erfinder: **Lindner, Christian, Dr.**
**Im Wasserblech 11**
**D-5000 Köln 91(DE)**
Erfinder: **Piejko, Karl-Erwin, Dr.**
**Unterscheider Weg 7a**
**D-5060 Bergisch-Gladbach 2(DE)**

**EP 0 355 642 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist die Verwendung von Mischungen als Substrate für optische Datenspeicher bestehend aus

a) 10 bis 90 Gew.-%, bevorzugt 20 bis 80 Gew.-%, insbesondere 30 bis 70 Gew.-% und ganz besonders 40 bis 65 Gew.-% eines thermoplastischen, aromatischen Polycarbonats, dessen Moleküle zu mindestens 50 Gew.-%, vorzugsweise zu mindestens 75 Gew.-%, besonders bevorzugt zu mindestens 90 Gew.-% und insbesondere zu 100 Gew.-%, aus wiederkehrenden Struktureinheiten der Formel (1) bestehen,

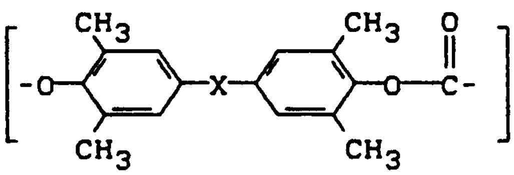 (1)

worin

X eine Einfachbindung, $C_1$-$C_6$-Alkylen, $C_1$-$C_6$-Alkyliden, $C_5$-$C_6$-Cycloalkyliden oder $C_5$-$C_6$-Cycloalkylen, bevorzugt Methylen, Butyliden oder Isopropyliden und besonders bevorzugt Isopropyliden bedeutet,

und dessen Moleküle zu höchstens 50 Gew.-%, vorzugsweise zu höchstens 25 Gew.-%, insbesondere zu höchstens 10 Gew.-% und ganz besonders zu 0 Gew.-% aus wiederkehrenden Struktureinheiten der Formel (2) bestehen,

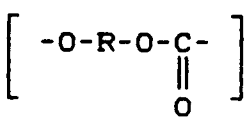 (2)

worin -R- einen Arylenrest bedeutet, der auch kernalkyliert oder kernhalogeniert sein kann, und der vorzugsweise 6 bis 36 C-Atome enthält und der besonders bevorzugt ein Rest der Formel (3) ist

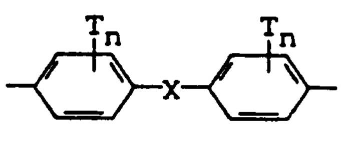 (3)

worin X die für Formel (1) genannte Bedeutung hat und außerdem

-O-,

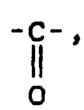

-S-, $-SO_2-$,

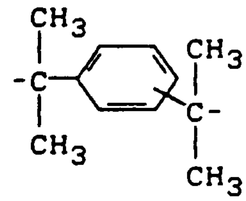

und Arylalkyliden sein kann und T ein $C_1$-$C_4$-Alkyl, Cl oder Br, und "n" 0 oder 1 oder 2 sind, und

b) 90 bis 10 Gew.-%, bevorzugt 80 bis 20 Gew.-%, insbesondere 70 bis 30 Gew.-% und ganz besonders 60 bis 35 Gew.-% eines thermoplastischen Copolymerisats, bestehend aus 99-50 Gew.-% mindestens einer Verbindung aus der Gruppe des Styrols und seiner Abkömmlinge und 1-50 Gew.-%, bevorzugt 3-40 Gew.-%, besonders bevorzugt 7-35 Gew.-% und insbesondere 10-30 Gew.-% mindestens einer Verbindung aus der Gruppe der (Meth)-Acrylsäureester, bezogen auf das Gewicht des thermoplastischen Copolymerisats.

(Meth)Acrylsäureester ist im vorliegenden Zusammenhang die verkürzte Schreibweise für Methacrylsäureester und/oder Acrylsäureester.

Beispiele für Arylalkylidenreste sind

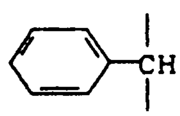

und

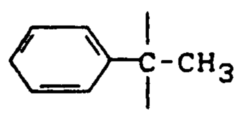 .

Die Mischungen stellen aufgrund ihrer hohen Steifigkeit, ihrer niedrigen Doppelbrechung und insbesondere ihrer optischen Homogenität hervorragende Substrate für optische Datenspeicher dar, so daß solche Mischungen sich zur Herstellung von optisch-homogenen Formkörpern (zum Beispiel Compact Discs) mit besonders niedriger Doppelbrechung in achsialer, tangentialer und radialer Richtung zur Plattenfläche eignen. Hervorzuheben ist die für die Ausleseoptik eines Abspielgeräts wichtige Homogenität der Doppelbrechung über den ganzen Spritzgußkörper hinweg.

Die anteilmäßige Zusammensetzung einer solchen Abmischung, bei der nicht nur Verringerung, sondern auch Kompensation der Doppelbrechung auftritt, kann aufgrund unterschiedlicher Fließvorgänge der Schmelze von der Gestalt eines Formkörpers abhängen.

Die Information optischer Datenträger wird mit dem linear polarisierten Licht eines Lasers gelesen und im Falle beschreibbarer Datenspeicher auch eingeschrieben. Eines der Systeme für beschreib- und löschbare Verfahren sind die magnetooptischen Datenspeicher: Hier muß besonderer Wert auf doppelbrechungsfreies Substratmaterial gelegt werden, da eine geringfügige Drehung (unter 1°) der Licht-Schwingungsebene schon als Signal gelesen wird.

Doppelbrechung setzt sich in Kunststoffen (Thermoplasten) im wesentlichen aus 2 Faktoren zusammen: Einer materialspezifischen Komponente einerseits und einem verarbeitungsbedingten Anteil, der auch als Orientierungsdoppelbrechung bezeichnet wird, andererseits. Doppelbrechungsarme, thermoplastische Formteile können somit theoretisch durch zweierlei Maßnahmen hergestellt werden, entweder

a) durch die Wahl geeigneter Verarbeitungsparameter, beispielsweise durch Verarbeitung von niedrigviskosen Typen bei relativ hoher Temperatur wie etwa beim Spritzgießen oder Spritzprägen von Audio-Compact-Discs aus thermoplastischem Polycarbonat, oder

b) durch den Einsatz von Material, das von sich aus nur geringe Neigung zur Doppelbrechung zeigt wie beispielsweise Polymethylmethacrylate, welche für die Herstellung von Video-Discs verwendet werden.

Fall a) ist allerdings nur von theoretischem Interesse, da unter Spritzgußbedingungen die hierzu notwendige völlig fehlende Orientierung der Polymerketten nicht erreicht werden kann.

In Fall b) wird der Einsatz von niedrig doppelbrechenden Thermoplasten zusätzlich durch die gleichzeitige Forderung nach niedriger Wasseraufnahme (kleiner gleich 0,3 %) und einer gewissen Dauerwärmeformbeständigkeit (größer 80 ° C) erheblich limitiert.

Beschreibbare Speicher wie zum Beispiel magnetooptische Systeme erfordern beim Beschreiben eine relativ hohe Energie, um ein akzeptables Signal/Rausch-Verhältnis zu bekommen. Dazu wird eine Optik mit großer numerischer Apertur verwendet. Durch den Öffnungswinkel der Schreib- und Leseoptik bedingt, bekommt eine möglichst geringe optische Anisotropie auch für den Strahlenverlauf in tangentialer und radialer Richtung erhebliche Bedeutung. So zeigen Compact Discs aus Polycarbonat, die in achsialer Richtung bereits relativ niedrige Gangunterschiede der Doppelbrechung (20 nm/mm) aufweisen, tangential und radial hoch hohe Meßwerte, typischerweise um 500 bis 1000 nm/mm. In Abhängigkeit von der Größe der numerischen Apertur addieren sich die Doppelbrechungsbeträge in tangentialer und radialer Richtung mehr oder weniger zu der Doppelbrechung in achsialer Richtung.

Erforderlich ist weiterhin, daß die Doppelbrechungswerte über die ganze Compact Disc hinweg eine relativ geringe Schwankungsbreite aufweisen, um eine eventuelle Kompensation geringfügiger Doppelbrechung leichter ausführen zu können.

Bekannt ist die allgemeine Möglichkeit, die Doppelbrechung eines Polymeren zu verringern, indem man ein Polymeres mit entgegengesetzter Doppelbrechung hinzufügt (J. Hennig, Vortrag auf der Tagung "Neue Polymere" in Bad Nauheim, 14./15.04.1986: "Polymere als Substrate für optische Plattenspeicher").

Aus der DE-OS 33 27 929 sind doppelbrechungsfreie Kunststoffe bekannt, die diese Eigenschaften dadurch erreichen, daß mindestens zweiflächige Gebilde aus Kunststoff mit je einer optischen Achse senkrecht zur Flächennormalen unter einem Winkel von 90 ° parallel hintereinander angeordnet sind, und daß die Summe der Gangunterschiede überall nahezu Null ist. Vorzugsweise werden Folien so miteinander kombiniert, daß eine Kompensation der Doppelbrechung eintritt (Seite 6 der DE-OS, Absätze 2 und 3).

Geeignete Kunststoffe sind z.B. Polyarylensulfon, Polystyrol, Polyvinylchlorid oder Polyurethan. Vorzugsweise verwendet man Polymerisate, die gute optische Qualitäten haben, wie Styrol-Acrylnitril-Mischpolymerisate, Polymethylpenten, Polycarbonat, Polyacrylsäureester, Polymethacrylsäureester, Celluloseester oder Mischungen und Copolymerisate, welche die genannten Polymere enthalten. Ganz besonders bevorzugt werden Polycarbonat oder Mischungen von Kunststoffen, die mindestens 10 Gew.-% Polycarbonat enthalten, eingesetzt. Als Polycarbonate sind auch solche aus kernalkylierten Diphenolen, wie Tetramethylbisphenol-A geeignet.

Abmischungen von Tetramethylbisphenol-Polycarbonaten mit Copolymerisaten von Styrol und (Meth)-Acrylsäureestern sind bekannt (siehe beispielsweise DE-PS 23 29 585 und K.E. Min und D.R. Paul "ACS-Symposium, New Orleans, 1987). Über die Verwendungsmöglichkeit solcher Blends als Substrate für optische Datenspeicher ist darin nichts beschrieben.

In der japanischen Offenlegungsschrift Sho-61-19656 werden Gemische aus Polycarbonaten mit Styrolharz-Copolymeren beschrieben, die als Rohstoffe für optische Apparate empfohlen werden. Die Polycarbonate werden aus Bisphenolen hergestellt, von denen eine Anzahl aufgeführt wird, darunter auch 2,2-Bis-(3,5-dimethyl-4-hydroxyphenyl)-propan. In den Beispielen wird allerdings ausschließlich Bisphenol-A-Polycarbonat eingesetzt.

Als Styrolharz-Copolymere kommen solche aus Styrol mit einem, zwei oder mehreren Vertretern einer Gruppe bestehend aus ungesättigten Mono- und Dicarbonsäuren sowie deren Derivaten in Frage. Diese ungesättigten Mono- und Dicarbonsäuren und deren Derivate werden in Mengen von 1 bis 30 Gew.-% in die Styrolharze einpolymerisiert.

Als Monocarbonsäuren werden Acrylsäure und Methacrylsäure, als deren Derivate Acrylamid und Methacrylamid, aber nicht Acrylsäureester, Methacrylsäureester, Acrylnitril und Methacrylnitril genannt.

Vielmehr wird im Sho-61-19656 gesagt, daß in dem Styrolharz über Acrylsäure, Methacrylsäure, Acrylamid und Methacrylamid hinaus auch weitere, damit copolymerisierbare ungesättigte Verbindungen wie z.B. Acrylnitril, Methacrylnitril, Methylmethacrylat, Methylacrylat, Vinylacetat usw. zu Anteilen unter 10 Gew.-% mit einpolymerisiert werden dürfen.

Acrylnitril, Methacrylnitril sowie Acrylsäureester und Methacrylsäurester, wie Methylmethacrylat und Methylacrylat, können somit nur als dritte Komponente neben ungesättigten Mono- und Dicarbonsäuren und deren genannten Derivaten im Styrolharz gemäß Sho- 61-19656 einbezogen werden.

Es hat sich nun gezeigt, daß durch die Auswahl eines speziellen Polycarbonats einerseits und durch die Wahl eines speziellen Styrolcopolymerisats andererseits Mischungen mit optimalen Ergebnissen in der optischen Qualität erzielt werden.

Aus der DE-OS 3 635 825 sind Mischungen aus aromatischen Polycarbonaten mit Polystyrolen und ihre Verwendung als Substrate für optische Datenspeicher bekannt.

Aus der EP-A 0 199 824 sind optisch verwendbare Materialien bekannt, die aus Gemischen von Polycarbonaten mit Polystyrolen oder mit Poly-alkylacrylaten oder mit Poly-alkylmethacrylaten bestehen können (Seite 8 von EP-0 189 824). Pfropfcopolymere von Methylmethacrylat-Styrol-Copolymeren können auch eingesetzt werden (Seite 11 von EP 0 199 824). In den Beispielen werden Styrol-Maleinsäureanhydrid-Copolymere (Beispiel 2), Copolymere aus Methylmethacrylat, Styrol und N-Butylmaleimide (Beispiel 3) und Pfropfpolymere von Methylmethacrylat und Styrol auf Gycidylmethacrylatstyrol-methylmethacrylat-Oligomere (Beispiel 4) eingesetzt. An den Vergleichsbeispielen 2, 3 und 4 geht jedoch hervor, daß sowohl Styrol-Maleinsäureahydrid-Copolymere allein (Vergleichsbeispiel 2) als auch Methylmethacrylat-Styrol-Copolymere allein (Vergleichsbeispiele 3 und 4) als optische Materialien ungeeignet sind. Beispiel 2 zeigt zudem, daß bei Abmischungen mit Polycarbonaten eine dritte Komponente nötig ist. Tetramethylbisphenol-polycarbonate sind im EP-A 0 199 824 nicht angesprochen.

Die Einphasigkeit der erfindungsgemäß zu verwendenden Formmassen ist als notwendige nicht aber als hinreichende Bedingung für eine weitgehende optische Homogenität entsprechender spritzgegossener Formkörper anzusehen, wie folgendes Beispiel zeigt: Ein homogener einphasiger Blend aus Tetramethylbisphenol A- und Bisphenol A-Polycarbonat zeigt - natürlich auf höherem Doppelbrechungsniveau - starke Schwankungen der Doppelbrechung über den ganzen Formkörper hinweg (Beispiel 3).

Die als Komponente a) einzusetzenden Polycarbonate sind als solche bekannt oder nach bekannten Verfahren herstellbar.

Den Struktureinheiten der Formel (1) zugrunde liegende Diphenole der Formel (4)

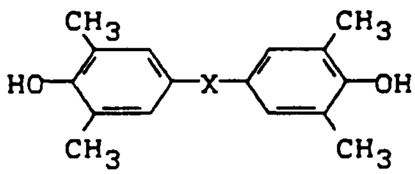

(4),

worin
X die für Formel (1) genannte Bedeutung hat,
sind beispielsweise
Bis-(3,5-dimethyl-4-hydroxyphenyl),
Bis-(3,5-dimethyl-4-hydroxyphenyl)-methan,
2,2-(3,5-dimethyl-4-hydroxyphenyl)-propan,
2,2-(3,5-dimethyl-4-hydroxyphenyl)-butan,
2,4-(3,5-dimethyl-4-hydroxyphenyl)-2-methylbutan,
1,1-(3,5-dimethyl-4-hydroxyphenyl)-cyclohexan.

Bevorzugt werden von diesen Bisphenolen die folgenden:
Bis-(3,5-dimethyl-4-hydroxyphenyl)-methan,
2,2-(3,5-dimethyl-4-hydroxyphenyl)-propan,
2,2-(3,5-dimethyl-4-hydroxyphenyl)-butan.

Besonders bevorzugt wird das 2,2-Bis-(3,5-dimethyl-4-hydroxyphenyl)-propan.

Den bifunktionellen Struktureinheiten der Formel (2) können beliebige andere Diphenole als die der Formel (4) zugrundeliegen.

Geeignete andere Diphenole der Formel (5) HO-R-OH sind Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole sowie entsprechende substituierte Verbindungen.

Die Diphenole der Formeln (4) und (5) sind entweder bekannt oder nach bekannten Verfahren herstellbar. (Siehe dazu beispielsweise Hermann Schnell, Chemistry and Physics of Polycarbonates, Polymer Reviews, Volume 9, Interscience Publishers, New York, 1964; die Veröffentlichung V. Serini, D. Freitag, H. Vernaleken, Polycarbonate aus o, o, o', o'-tetramethylsubstituierten Bisphenolen, Angew. Makrom. Chem. 55, (1976), 175 - 189, und Deutsche Offenlegungsschriften 2 063 050, 2 211 957, 2 248 817 und 2 615 038.)

Beispiele für geeignete Diphenole (5) sind
Bis-(4-hydroxyphenyl)-methan,
2,2-Bis-(4-hydroxyphenyl)-propan,
2,2-Bis-(4-hydroxyphenyl)-sulfid,
2,2-Bis-(4-hydroxyphenyl)-sulfon,
1,1-Bis-(4-hydroxyphenyl)-cyclohexan,
1,1-Bis-(4-hydroxyphenyl)-1-phenyl-ethan,
α,α'-Bis-(4-hydroxyphenyl)-p-diisopropylbenzol,
2,2-Bis-(3-methyl-4-hydroxyphenyl)-propan,
2,2-Bis-(3,5-dichlor-4-hydroxyphenyl)-propan und
2,2-Bis-(3,5-dibrom-4-hydroxyphenyl)-propan.

Das 2,2-Bis-(4-hydroxyphenyl)-propan ist das besonders bevorzugte Diphenol (5).

Für die Einstellung des Molekulargewichts der erfindungsgemäß einsetzbaren Polycarbonate können Kettenbegrenzer eingesetzt werden. Solche Kettenbegrenzer sind in der Literatur vielfach beschrieben. Es sind monofunktionelle Verbindungen, die mit Bisphenolen bzw. dem eingesetzten Kohlensäureabkömmling reagieren können, wie z.B. Amine, Phenole, Carbonsäuren und deren Abkömmlinge. Bevorzugt werden die Phenole, wie z.B. Phenol, o-Kresol, 2,6-Dimethylphenol, p-tertiär-Butylphenol und insbesonders Phenole der Formel

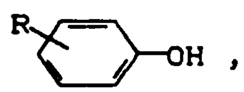

in denen R einen verzweigten Alkylrest mit 8 - 9 C-Atomen darstellt, wobei Phenole der Formel

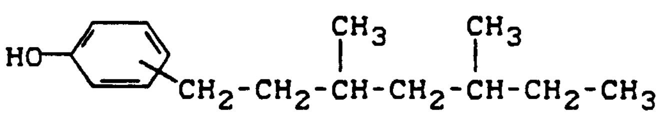

und insbesondere der Formel

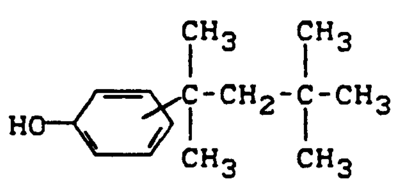

bevorzugt werden. Besonders bevorzugt wird das p-Isooctyl-Phenol der Formel

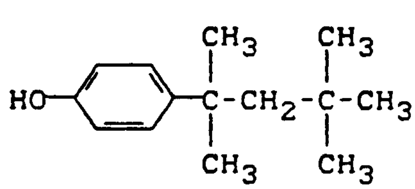

Die Molekulargewichte der erfindungsgemäß einsetzbaren Polycarbonate können in weiteren Grenzen variieren. Bevorzugt werden Polycarbonate mit Molekulargewichten $\overline{M}_w$ von 6000 - 125 000, besonders bevorzugt von 12 000 - 60 000, ganz besonders bevorzugt von 17 000 - 43 000 und insbesondere von 21 000 - 31 000.

Die erfindungsgemäß einsetzbaren Polycarbonate können durch den Einbau geringer Mengen, vorzugsweise von Mengen zwischen 0,05 und 2,0 Mol.-% (bezogen auf eingesetzte Diphenole), an drei- oder mehr als dreifunktionellen Verbindungen, insbesondere solchen mit drei oder mehr als drei phenolischen Hydroxygruppen verzweigt sein. Polycarbonate dieser Art sind literaturbekannt.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2,-Bis-[4,4-bis-(4-hydroxyphenyl)-cyclohexyl]-propan, 2,4-Bis-(4-hydroxyphenylisopropyl)-phenol, 2,6-Bis-(2-hydroxy-5′-methylbenzyl)-4-methylphenol, 2-(4-Hydroxyphenyl)-2-(2,4-dihydroxyphenyl)-propan, Hexa-[4-(4-hydroxyphenylisopropyl)-phenyl]-ortho-terephthalsäureester, Tetra-(4-hydroxyphenyl)-methan, Tetra-[4-(4-hydroxyphenylisopropyl)-phenoxy]-methan und 1,4-Bis-[4′,4″-dihydroxytriphenyl)-methyl]-benzol. Einige der sonstigen dreifunktionellen Verbindungen sind 2,4-Dihydroxybenzoesäure, Trimesinsäure, Cyanurchlorid, 3,3-Bis-(4-hydroxyphenyl)-2-oxo-2,3-dihydroindol und 3,3-Bis-(3-methyl-4-hydroxyphenyl)-2-oxo-2,3-dihydroindol.

Die erfindungsgemäß einzusetzenden Polycarbonate gemäß Komponente a) können anstelle der Kohlensäurereste andere Dicarbonsäurereste in Mengen kleiner ≦40 Mol%, vorzugsweise kleiner ≦25 Mol% und insbesondere ≦10 Mol%, bezogen jeweils auf die Molsumme an Säureestern im Polycarbonat, enthalten.

Diese anderen Dicarbonsäurereste können aliphatischen und/oder aromatischen Dicarbonsäuren entstammen, vorzugsweise aromatischen Dicarbonsäuren. Beispiele für aromatische Dicarbonsäuren sind Isophthalsäure und Terephthalsäure sowie deren Gemische.

Den erfindungsgemäß einzusetzenden Styrolcopolymerisaten gemäß Komponente b) können Styrol und seine Abkömmlinge zugrunde liegen, wobei jeweils eine oder mehrere Styrolverbindungen einsetzbar sind. Zu der Gruppe des Styrols und seiner Abkömmlinge zählen beispielsweise Styrol, α-Methylstyrol, p-Methylstyrol, 3,4-Dimethylstyrol, o- und p-Divinylbenzol, α-Chlorstyrol, p-Chlorstyrol, 2,4-Dichlorstyrol und p-Chlor-α-methylstyrol. Bevorzugt werden Styrol, α-Methylstyrol und p-Methylstyrol, besonders bevorzugt Styrol selbst.

Es wird mindestens ein Comonomer aus der Gruppe der Acrylester und Methacrylester eingesetzt. Solche Comonomeren sind beispielsweise: Methylacrylat, Ethylacrylat, n- und Iso-propylacrylat, n- und iso-Butylacrylat, 2-Ethylhexylacrylat, Methylmethacrylat, Ethylmethacrylat, n- und Iso-Propylmethacrylat, n- und Isobutylmethacrylat, Cyclohexylmethacrylat und Isobornylmethacrylat. Bevorzugt werden Methylacrylat und Methylmethacrylat, besonders bevorzugt Methylmethacrylat eingesetzt.

Bevorzugte Styrolpolymerisate sind:
Styrol-Methylmethacrylat-Copolymere und Styrol-Methylacrylat-Copolymere.

Besonders bevorzugt werden Styrol-Methylmethacrylat-Copolymere und Styrol-Methylacrylat-Copolymere.

Die thermoplastischen Styrolpolymerisate können nach bekannten Verfahren der radikalischen Polymerisation hergestellt werden, z.B. durch Polymerisation in Masse, in Lösung, in Emulsion oder durch kombinierte Verfahren wie Lösungs-, Fällungs- oder Massesuspensionsverfahren. Es können jedoch auch noch andere bekannte Verfahren zur Herstellung der Styrolpolymerisate benutzt weden, wie z.B. ionische Polymerisationsverfahren und Verfahren mit metallorganischen Mischkatalysatoren (Ziegler-Natta-Verfahren).

Die Molekulargewichte der erfindungsgemäß einsetzbaren Styrolpolymerisate können in weiten Grenzen variieren. Bevorzugt werden Molekulargewichte $\overline{M}w$ von 5.000 - 5.000.000, besonders bevorzugt von 20.000 - 200.000.

Die erfindungsgemäß einsetzbaren thermoplastischen Styrolpolymerisate können linear oder verzweigt sein. Die Verzweigung kann durch Einsatz von verzweigten Verbindungen, z.B. Divinylbenzol, als Comonomer erfolgen, oder auch durch Ausbildung von Verzweigungsstellen auf andere Weise, z.B. durch radikalische Pfropfung während der Polymerisation.

Als erfindungsgemäß einzusetzende Polycarbonate gemäß Komponente a) werden auch Mischungen von mindestens zwei unterschiedlichen Polycarbonaten verstanden, vorausgesetzt, daß die Mischungen die Anforderungen erfüllen, die in den Ansprüchen und im Text für das Polycarbonat genannt sind. Dabei kann mindestens eines der Polycarbonate der jeweiligen Mischung auch von der Zusammensetzung abweichen, die für das erfindungsgemäß einzusetzende Polycarbonat genannt wird, vorausgesetzt, daß die Mischung

insgesamt der genannten Zusammensetzung entspricht. Wenn mindestens zwei Polycarbonate eingesetzt werden, können diese vor der Mischung mit dem Styrolpolymerisat oder auch gleich gemeinsam mit diesem gemischt werden, so z.B. über die Schmelze.

Als erfindungsgemäß einzusetzende Styrolcopolymerisate gemäß Komponente b) werden auch Mischungen von mindestens zwei unterschiedlichen Styrolpolymerisaten verstanden, wobei für die jeweilige Mischung sinnentsprechend gilt, was vorstehend für die Mischungen von Polycarbonaten gesagt wurde.

Den erfindungsgemäß zu verwendenden Mischungen aus den Komponenten a) und b) können noch übliche Additiv c) zugesetzt werden.

Übliche Additive gemäß Komponente c) im Sinne der vorliegenden Erfindung betrifft nicht Verträglichkeitsvermittler gemäß Lehre der EP-OS 0 199 824, sondern vielmehr vor allem Stabilisatoren gegen Hitze, UV-Licht- und Feuchtigkeit für die Komponenten a) und b) der erfindungsgemäß zu verwendenden Kunststoffgemische. Weiter seien genannt Flammschutzmittel, Gleit- und Entformungsmittel und weitere Verarbeitungshilfsmittel, vorausgesetzt, daß diese die optische Qualität der Kunststoffgemische aus den Komponenten a) und b) nicht beeinflussen.

Gegenstand der vorliegenden Erfindung ist somit auch die Verwendung von Mischungen als Substrate für optische Datenspeicher bestehend aus den Komponenten a) und b) und c) üblichen Additiven in üblichen Mengen, wobei die Summe der Komponenten a) und b) jeweils 100 Gew.-% beträgt und die Menge an Additiv c) sich auf jeweils 100 Gew.-% der Summe der Komponenten a) und b) bezieht.

Übliche Mengen von Additiven sind solche, wie sie für die thermoplastischen Polycarbonate als solche oder für die thermoplastischen Styrol-(Meth)Acrylsäureester-Copolymerisate als solche üblich sind.

Die Herstellung der erfindungsgemäß zu verwendenden Formmassen aus den Komponenten a) und b) und gegebenenfalls c) kann über deren Lösung in organischen Lösemitteln oder Lösemittelgemischen mit anschließender Abdampfung des Lösemittels erfolgen, z.B. in Ausdampfknetern oder Ausdampfextrudern. Sie kann jedoch auch direkt über die Schmelze erfolgen, z.B. auf Mischwalzen, Knetern oder Extrudern. Die Mischung der Ausgangskomponenten über die Schmelze erfolgt im allgemeinen bei 180 °C - 450 °C, bevorzugt bei 220 °C - 400 °C, besonders bevorzugt bei 260 °C - 360 °C und insbesondere bei 280 °C - 340 °C Schmelzetemperatur.

Die Einarbeitung der Additive gemäß Komponente c) kann gegebenenfalls auch nachträglich in das Gemisch der Komponenten a) + b) erfolgen.

Es können aber auch additivhaltige Komponenten a) beziehungsweise b) eingesetzt werden, also eine Vorabmischung der Komponenten a) und/oder b) mit den Additiven c) erfolgen.

Die Schmelzverarbeitung der thermoplastischen Formmassen aus den Komponenten a), b) und gegebenenfalls c) erfolgt bevorzugt bei 260 °C - 360 °C, insbesondere bei 290 °C - 340 °C Schmelzetemperatur.

Bei der Verarbeitung zu Folien kann neben der Schmelzextrusion auch ein Gießverfahren aus Lösung mit anschließender Abdampfung des Lösungsmittels Anwendung finden.

Die erfindungsgemäß zu verwendenden Mischungen enthalten bevorzugt 10 - 80 Gew.-% Styrolanteil (als Styrolanteil des Copolymerisats), besonders bevorzugt 20 - 65 Gew.-%, ganz besonders bevorzugt 25 - 55 Gew.-%.

Die erfindungsgemäß zu verwendenden Mischungen haben, nicht zuletzt aufgrund ihrer hervorragenden Verträglichkeit, technisch wertvolle Eigenschaften, die sie für optische Anwendungen, insbesondere auf dem Gebiet optischer Speichermedien geeignet machen.

Solche optischen Speichermedien sind beispielsweise nur lesbare optische Speicher (Optical Read Only Memory, OROM) einmalig zu beschreibende optische Speicher (Write Once Read Mostly,WORM) und löschbare und wieder zu beschreibende optische Speicher, ggf. mehrfach (Erasable Optical Disc, EOD). Bekannte Anwendungen von OROM-Speichern sind Video Long Play (VLP), Audio compact disc (CD), CD Read Only Memory (CD-ROM), CD Interactive (CD-I). EOD-Speichermedien nutzen verschiedene Mechanismen, so z.B. die reversible Phasenumkehr (Phase Change, PC), die reversible Farbumkehr (Colour Change, CC) und die reversible Magnetisierung (Magneto Optical Recording, Thermo Magneto Optic, MOR).

Optische Speicher sind beispielsweise in folgenden Literaturstellen beschrieben: J. Henning, Kunststoffe für optische Plattenspeicher, Kunststoffe 75, (1985) 7, S. 425 - 430; W. Siebourg, Polycarbonat - ein Werkstoff für optische Speichermedien, Kunststoffe 76 (1986) 10, S. 917 - 919); Egon Schmidt, Ein einfacher magnetooptischer Speicher, Frankfurter Allgemeine Zeitung vom 3.6.1987, Rubrik Naturwissenschaft und Technik.

Die optischen Datenspeicher bestehen im allgemeinen aus einer polymeren Basisplatte oder einer polymeren Basisfolie (gegebenenfalls Verbundfolie), auf die eine Informationsschicht aufgebracht wird. Mit Hilfe eines Lichtstrahls, z.B. eines Laserstrahls, wird die Information von solch einem Datenspeicher abgerufen, auf solch einem Datenspeicher eingeschrieben oder auch von solch einem Datenspeicher gelöscht. Dabei durchläuft der Lichtstrahl die Polymerplatte oder Polymerfolie. Für den Einsatz als

Basisplatte oder Basisfolie einer informationstragenden Datenspeicherplatte oder Datenspeicherfolie eignen sich nur wenige Polymere, und diese auch nur begrenzt, da sie nicht alle geforderten Eigenschaften erfüllen.

Als Polymere für die Herstellung von Basisplatten oder Basisfolien für optische Speichermedien werden bisher Polymethylmethacrylate und Polycarbonate aus 2,2-Bis-(4-hydroxyphenyl)-propan(Bisphenol A) eingesetzt. Beschrieben werden auch, wie bereits erwähnt, in der Japanischen Offenlegungsschrift Sho-61-19656 und der europäischen Offenlegungsschrift 0 199 824 die Verwendung von Kunststoffmischungen für optische Verwendungszwecke.

Die erfindungsgemäße Verwendung der Mischungen aus den Komponenten a) und b) und gegebenenfalls c) ist deshalb so vorteilhaft, da diese Mischungen ein sehr günstiges Eigenschaftsbild aufweisen, welches sich auszeichnet durch:

1. Hohe Wärmeformbeständigkeit
2. Hohe Fließfähigkeit der Schmelze
3. Große Oberflächengüte
4. Hohe Abbildegenauigkeit bei der Verarbeitung
5. Hoher Glanz
6. Gute Metallhaftung
7. Hohe Transparenz
8. Gute Thermostabilität
9. Leichte Entformbarkeit
10. Geringe Doppelbrechung in einer Platte
11. Große Gleichmäßigkeit der Doppelbrechung über eine Platte
12. Gute mechanische Eigenschaften
13. Geringe Neigung zur Bildung von Mikrorissen
14. Geringe Wasseraufnahme
15. Geringe Verzugsneigung

Sowohl einzelne der genannten guten Eigenschaften, als insbesondere auch die Kombination dieser guten Eigenschaften machen die Formmassen dieser Erfindung zu einem Basismaterial optischer Datenspeicher, wie es bisher nicht zur Verfügung stand.

Besonders zu erwähnen sind von den guten mechanischen Eigenschaften die überraschend hohen E-Moduli der erfindungsgemäßen Polymermischungen, die deutlich über den Werten liegen, die sich aus der Zusammensetzung und den E-Moduli der Einzelkomponenten rechnerisch ermitteln lassen. Infolge dieser hohen E-Moduli, der geringen Wasseraufnahme, der geringen Doppelbrechung und ihrer guten Konstanz über den gesamten Plattenbereich ist es möglich, hochwertige optische Speicherplatten mit Durchmessern auch oberhalb von 14 cm Durchmesser, bevorzugt oberhalb von 20 cm und insbesondere oberhalb von 25 cm Durchmesser aus den erfindungsgemäßen Polymermischungen herzustellen. Solche Plattenspeichersysteme sind beispielsweise 30 cm-Plattensysteme, die aus zwei durch einen Abstandshalter getrennten Scheiben mit aufgebrachten metallischen Speicherschichten bestehen und deren Trägersubstrat einen E-Modul von mindestens 3000 N/mm besitzen sollte.

Besonders zu erwähnen ist auch die geringe Verfärbungsneigung der erfindungsgemäß einsetzbaren Polymerlegierungen, insbesondere auch bei hohen Verarbeitungstemperaturen, wie sie bei der Herstellung von Compact-Discs üblich sind.

Die Formmassen dieser Erfindung eignen sich besonders für nur lesbare optische Speicher (OROM), ganz besonders jedoch für einmalig zu beschreibende optische Speicher (WORM) und insbesondere für löschbare und wieder zu beschreibende Speicher (EOD).

Beispiele 1 - 6:

Erfindungsgemäße Mischungen aus Polycarbonaten und Styrolpolymerisaten, deren Doppelbrechungsverhalten und Steifigkeit.

Eingesetzte Polymere:

A. 2,2-Bis-(3,5-dimethyl-4-hydroxyphenyl)-propan-Polycarbonat (MPC), als Kettengebrenzer p-Isooctylphenol einkondensiert, $\eta_{rel}$ = 1,202 (gemessen bei 25 °C in Methylenchlorid, c = 5 g/l).

B. 2,2-Bis-(3,5-dimethyl-4-hydroxyphenyl)-methan/2,2-Bis-(3,5-dimethyl-4-hydroxyphenyl)-propan-Copolycarbonat 75/25 Molteile (FPC 75), als Kettenbegrezer p-Isooctylphenol einkondensiert, $\eta_{rel}$ = 1,210 (gemessen bei 25 °C in Methylenchlorid, c = 5 g/l).

C. 2,2-Bis-(3,5-dimethyl-4-hydroxyphenyl)-butan-Polycarbonat (BPC), als Kettenbegrenzer p-Isooctylphenol einkondensiert, $\eta_{rel}$ = 1,198 (gemessen bei 25 °C in Methylenchlorid, c = 5 g/l).

D. 2,2-Bis-(4-hydroxyphenyl)-propan-Polycarbonat (PC), als Kettenbegrenzer p-tert.-Butylphenol einkondensiert, $\eta_{rel}$ = 1,205 (gemessen bei 25 °C in Methylenchlorid, c = 5 g/l).

E. Styrol-Methylmethacrylat-Copolymer 80/20 Gewichtsteile (SMM 20), $\overline{M}_w$ = 45 000 (gemessen durch Gelpermeationschromatographie).

F. Styrol-Maleinsäureanhydrid-Copolymer 91/9 Gewichtsteile (SMA 9), $\overline{M}_n$ = 120 000 (gemessen durch Gelpermeationschromatographie).

G. Styrol-Acrylnitril-Copolymer 90/10 Gewichtsteile (SAN 10), $\overline{M}_w$ = 60 000 (gemessen durch Gelpermeationschromatographie).

Mehrere der o.g. Polymeren wurden, wie aus der folgenden Tabelle 1 hervorgeht, im angegebenen Verhältnis Polycarbonat/Styrolpolymer über die Schmelze bei 280 °C gemischt. Die Polymermischungen wurden dann bei 320 °C Massetemperatur zu Compact-Discs mit 12 cm Durchmesser und 0,12 cm Dicke verspritzt. Diese Compact-Discs wurden dann auf ihre Transparenz visuell untersucht und auf ihre Doppelbrechung hin vermessen. Bei der Messung der Doppelbrechung wurden Messungen in verschiedenen Abständen vom Disc-Mittelpunkt vorgenommen, außerdem wurden die Messungen in drei Richtungen zur Disc vorgenommen (achsial, tangential, radial). Die Ergebnisse der Tabelle zeigen die hervorragend niedrige und gleichmäßige Doppelbrechung der erfindungsgemäßen Discs, während die Vergleichsdisc wesentlich höhere und ungleichmäßigere Doppelbrechungswerte liefert.

In der Tabelle 1 werden die E-Moduli der Polymermischungen und der Ausgangskomponenten angegeben. Es zeigt sich, daß die erfindungsgemäßen E-Moduli aufweisen, die höher sind, als aus dem Mischungsverhältnis der Ausgangskomponenten und deren E-Moduli errechenbar ist. Die Vergleichsmischung des Beispiels 4 dagegen zeigt einen E-Modul, der niedriger ist, als er aus dem Mischungsverhältnis der Ausgangskomponenten und deren E-Modul theoretisch errechenbar ist.

Weiterhin wurden Polymere aus den obengenannten, wie aus der folgenden Tabelle 2 hervorgeht, im angegebenen Verhältnis über die Schmelze bei 260 °C gemischt. Die Polymermischungen wurden dann bei verschiedenen Schmelzetemperaturen, wie aus Tabelle 2 ersichtlich, zu Compact-Discs mit 12 cm Durchmesser und 0,12 cm Dicke im Spritzguß verarbeitet. Bei der Beurteilung der Platten stellt sich heraus, daß die Compact-Discs, die aus dem erfindungsgemäßen Styrol-Methylmethacrylat-Copolymerisat hergestellt wurden, farblos sind, während die Compact-Discs, die aus den nicht erfindungsgemäßen Styrol-Acrylnitril-Copolymeren enthalten wurden, bei hohen Verarbeitungstemperaturen nicht farbstabil sind.

<u>Tabelle 1</u>
Doppelbrechung und Steifigkeit von erfindungsgemäßen Legierungen

| Bsp. | Polymermischung 55/45 Gew.-Teile | Untersuchungen an Compact Disc, ø 12 cm Dicke 0,12 cm; Gangunterschied (Doppelbrechung) in nm/mm, Entfernung von Disc-Mittelpunkt: | | | E-Modul aus Zugversuch ($n/mm^2$) (DIN 53 457) | Aussehen der Compact Disc |
|---|---|---|---|---|---|---|
| | | 25 mm 1/2/3 (s.u.) | 40 mm 1/2/3 (s.u. | 55 mm 1/2/3 (s.u.) | | |
| 1 | MPC/SMM 20 | +1/-140/+144 | 0/-147/-150 | -1/-151/+138 | 3100 (2760)* | klar |
| 2 | FPC 75/SMM 20 | +1/-146/+144 | -1/-143/+142 | -1/-145/+148 | 3100 (2715)* | klar |
| 3 | BPC/SMM 20 | 0/-143/+139 | -1/-152/+149 | -3/-148/+142 | 3100 (2760)* | klar |
| 4 | PC/SMA 9 60/40 Gew.-Tle. Vergleich entsprechend JA 61-19 659 | -45/-328/+292 | -35/-356/+356 | +52/-370/+399 | 2400 (2640)* | trüb |

* = zum Vergleich aus E-Moduli und Gewichtsanteil der Ausgangskomponenten errechnet.
E-Modul (Zugversuch) von MPC, FPC 75, BPC: 2400 $N/mm^2$
" " " PC : 2200 "
" " " SMM 20, SMA 9: 3300 "
1/2/3 = Messungen achsial/tangential/radial

**Tabelle 2**

Farbe der erfindungsgemäßen Legierungen nach Verarbeitung über die Schmelze zu Compact-Discs

| Bsp. | Polymermischung 55/45 Gew.-Teile | Verarbeitungstemperatur zu Compact-Discs | Farbe der Compact-Disc |
|---|---|---|---|
| 1 | MPC/SMM 20 | 280 | farblos |
| | | 300 | " |
| | | 320 | " |
| | | 340 | " |
| 2 | MPC/SAN 10 | 280 | farblos |
| | | 300 | leicht gelb |
| | | 320 | gelb |
| | | 340 | gelbbraun |

## Patentansprüche

1. Verwendung von Mischungen als Substrate für optische Datenspeicher bestehend aus

a) 10 bis 90 Gew.-% eines thermoplastischen, aromatischen Polycarbonats, dessen Moleküle zu mindestens 50 Gew.-% aus wiederkehrenden Struktureinheiten der Formel (1) bestehen,

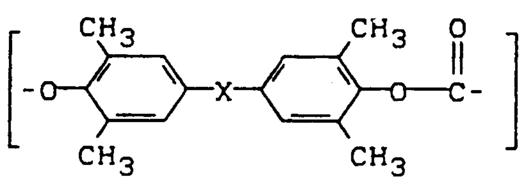

(1)

worin

X eine Einfachbindung, $C_1$-$C_6$-Alkylen, $C_2$-$C_6$-Alkyliden, $C_5$-$C_6$-Cycloalkyliden oder $C_5$-$C_6$-Cycloalkylen bedeutet, und dessen Moleküle zu höchstens 50 Gew.-% aus wiederkehrenden Struktureinheiten der Formel (2) bestehen,

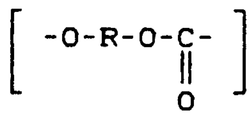

(2)

worin -R- einen Arylenrest bedeutet, der auch kernalkyliert oder kernhalogeniert sein kann, wobei anstelle der Kohlensäurereste andere Dicarbonsäurereste in Mengen ≦ 40 Mol%, bezogen jeweils auf die Molsumme an Säureestern im Polycarbonat enthalten sein können, und

b) 90 bis 10 Gew.-% eines thermoplastischen Copolymerisats, bestehend aus 99 bis 50 Gew.% mindestens einer Verbindung aus der Gruppe des Styrols und seiner Abkömmlinge und 1 bis 50 Gew.-% mindestens einer Verbindung aus der Gruppe der (Meth)Acrylsäureester.

**2.** Verwendung gemäß Anspruch 1, dadurch gekennzeichnet, daß in der Komponente b) der Gehalt an (Meth)Acrylsäureester von 3 bis 40 Gew.-% beträgt.

**3.** Verwendung gemäß Anspruch 1 und 2, dadurch gekennzeichnet, daß die Mischung aus 20 bis 80 Gew.-% an Komponente a) und 80 bis 20 Gew.-% an Komponente b) besteht.

**4.** Verwendung gemäß Anspruch 1, dadurch gekennzeichnet, daß die Komponente a) mindestens 75 Gew.-% aus wiederkehrenden Struktureinheiten der Formel (1) und zu höchstens 25 Gew.-% aus wiederkehrenden Struktureinheiten der Formel (2) besteht.

**5.** Verwendung gemäß Ansprüche 1 und 4, dadurch gekennzeichnet, daß in den Struktureinheiten (2) der Polycarbonatkomponente a) -R- 6 bis 36 C-Atome enthält.

**6.** Verwendung gemäß Anspruch 5, dadurch gekennzeichnet, daß -R- ein Rest der Formel (3) ist

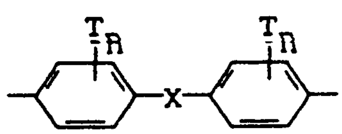

(3)

worin X die in Anspruch 1 genannte Bedeutung hat und außerdem
-O-,

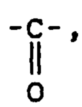

-S-, $-SO_2-$,

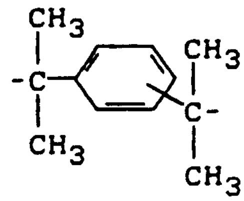

und Arylalkyliden sein kann und T ein $C_1$-$C_4$-Alkyl, C1 oder Br, und "n" 0 oder 1 oder 2 sind.

7. Verwendung gemäß Ansprüche 1 bis 6, dadurch gekennzeichnet, daß die Mischungen aus den Komponenten a) und b) und c) üblichen Additiven in üblichen Mengen bestehen, wobei die Summe der Komponenten a) + b) jeweils 100 Gew.-% beträgt und die Menge an Additiv c) sich auf jeweils 100 Gew.-% der Summe der Komponenten a) und b) bezieht.

**Claims**

1. The use of mixtures of substrates for optical data storage, consisting of
   a) from 10 to 90% by weight of a thermoplastic, aromatic polycarbonate in which at least 50% by weight of the molecules consist of recurrent structural units of formula (I)

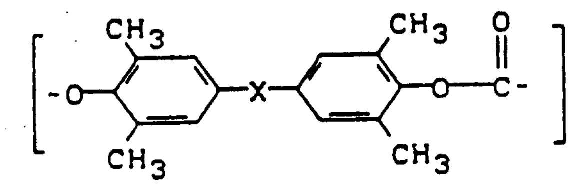

(1)

   wherein
   X denotes a single bond, $C_1$-$C_6$-alkylene, $C_2$-$C_6$-alkylidene, $C_5$-$C_6$-cycloalkylidene or $C_5$-$C_6$-cycloalkylene and at most 50% by weight of the molecules consist of recurrent structural units of formula (2)

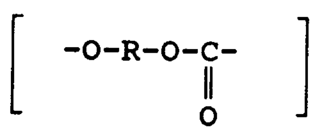

(2)

   wherein R denotes an arylene group which may also be alkylated or halogenated in the nucleus and in which the carbonic acid groups may be replaced by other dicarboxylic acid groups in quantities of ≦40 mol-%, based on the molar sum of acid esters in the polycarbonate,
   b) from 90 to 10% by weight of a thermoplastic copolymer consisting of from 99 to 50% by weight of at least one compound selected from styrene and its derivatives and from 1 to 50% by weight of at least one compound selected from (meth)acrylic acid esters.

2. Use according to Claim 1, characterized in that the amount of (meth)acrylic acid esters in component b) is from 3 to 40% by weight.

3. Use according to Claims 1 and 2, characterised in that the mixture consists of from 20 to 80% by weight of component a) and from 80 to 20% by weight of component b).

4. Use according to Claim 1, characterized in that at least 75% by weight of component a) consists of recurrent structural units of formula (1) and at most 25% by weight component a) consists of recurrent structural units of formula (2).

**5.** Use according to Claims 1 and 4, characterised in that -R- in the structural units (2) of polycarbonate component a) contains from 6 to 36 carbon atoms.

**6.** Use according to Claim 5, characterized in that -R-is a radical corresponding to formula (3)

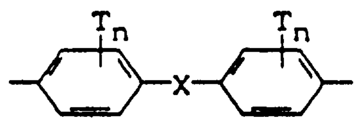

(3)

wherein X has the meaning indicated in Claim 1 and may in addition consist of
-O-,

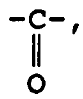

-S-, $-SO_2-$,

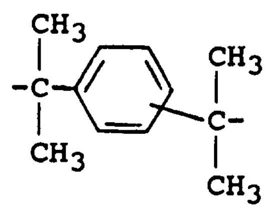

and arylalkylidene, T denotes $C_1$-$C_4$-alkyl, Cl or Br, and "n" stands for 0 or 1 or 2.

**7.** Use according to Claims 1 to 6, characterised in that the mixtures of components a) and b) and c) consist of conventional additives in conventional quantities, the sum of components a) + b) always amounting to 100% by weight and the quantity of additive c) being based on 100% by weight of the sum of components a) and b).

## Revendications

**1.** Utilisation, en tant que substrats pour des mémoires optiques, de mélanges consistant en :

a) 10 à 90% en poids d'un polycarbonate aromatique thermoplastique dont les molécules consistent pour au moins 50% en poids en motifs de structure répétés de formule (1) :

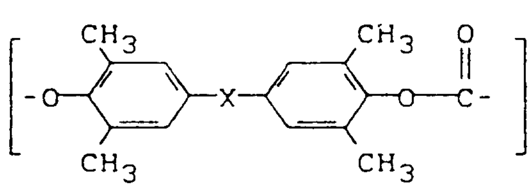

( 1 )

dans laquelle

X représente une liaison simple, un groupe alkylène en $C_1$-$C_6$, alkylidène en $c_2$-$c_6$, cycloalkylidène en $C_5$-$C_6$ ou cycloalkylène en $C_5$-$C_6$, et dont les molécules consistent pour 50% en poids au maximum en motifs de structure répétés de formule (2) :

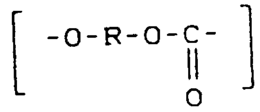

(2)

dans laquelle

-R- représente un groupe arylène qui peut être alkylé ou halogéné dans le noyau, les radicaux d'acide cabonique pouvant être remplacés par des radicaux d'acides dicarboxyliques en quantités inférieures ou égales à 40 mol% par rapport à la somme des moles des esters d'acides contenus dans le polycarbonate,

b) 90 à 10% en poids d'un copolymère thermoplastique consistant en 99 à 50% en poids d'au moins un composé du groupe du styrène et de ses dérivés et 1 à 50% en poids d'au moins un composé du groupe des esters (méth)acryliques.

**2.** Utilisation selon la revendication 1, caractérisée en ce que, dans le composant b), la teneur en esters (méth)acryliques est de 3 à 40% en poids.

**3.** Utilisation selon les revendications 1 et 2, caractérisée en ce que le mélange consiste en 20 à 80% en poids du composant a) et 80 à 20% en poids du composant b).

**4.** Utilisation selon la revendication 1, caractérisée en ce que le composant a) consiste en au moins 75% en poids de motifs de structure répétés de formule (1) et 25% en poids au maximum de motifs de structure répétés de formule (2).

**5.** Utilisation selon les revendications 1 et 4, caractérisée en ce que, dans les motifs de structure 2 du composant polycarbonate a), -R- contient de 6 à 36 atomes de carbone.

**6.** Utilisation selon la revendication 5, caractérisée en ce que -R-représente un groupe de formule (3) :

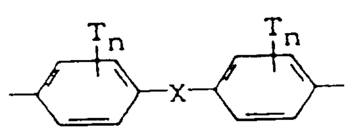

(3)

dans laquelle X a les significations indiquées dans la revendication 1 et peut en outre représenter :

-O-,

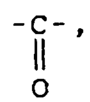

-S-, $-SO_2-$,

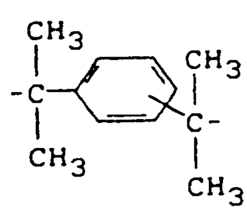

ou un groupe arylalkylidène, et T représente un groupe alkyle en $C_1$-$C_4$, Cl ou Br, et n est égal à 0, 1 ou 2.

7. Utilisation selon les revendications 1 à 6, caractérisée en ce que les mélanges consistent en les composants a) et b), et c) des additifs usuels aux proportions usuelles, la somme des composants a) + b) représentant 100% en poids et la quantité de l'additif c) se rapportant dans chaque cas à 100% en poids de la somme des composants a) et b).